# EUROPEAN PATENT APPLICATION

(11) **EP 4 667 738 A1**
(43) Date of publication of application: **24.12.2025**
(21) Application number: 24182764.1
(22) Date of filing: 18.06.2024
(51) Int. Cl.: F03D 1/06

(54) **WIND TURBINE BLADE SHELL WITH IMPROVED LOAD DISTRIBUTION**

(71) Applicant: LM Wind Power A/S, 6000 Kolding (DK)
(72) Inventor: JØRGENSEN, Jeppe Bjørn, 6000 Kolding (DK)
(74) Representative: COPA Copenhagen Patents

(57) **Abstract**

The present invention provides wind turbine blade shell portions for different portions of a wind turbine blade, having spar caps that improve the load distribution in the blade. One aspect provides to a wind turbine blade root portion having a leading edge (18) and a trailing edge (20), the root portion extending between a root end (52) and a first end (53) along a longitudinal axis (54) of the root portion, wherein the root end is configured for attaching the wind turbine blade shell portion to a wind turbine rotor hub, and wherein the root portion comprises a spar cap (540, 1240) having a first outermost edge (41) facing the leading edge of the blade shell portion and a second outermost edge (42) facing the trailing edge of the blade shell portion, wherein the spar cap has a first width *W₁* at a first longitudinal position *P₁* of the root portion and a second width *W₂* at a second longitudinal position *P₂* of the root portion, wherein the first longitudinal position is closer to the root end (52) than the second longitudinal position, and wherein the first width is larger than the second width. Additional aspects are also provided.

## Description

### TECHNICAL FIELD

The present disclosure relates to reinforcement for improved load distribution in a wind turbine blade.

### BACKGROUND

Wind turbine blades comprise a body with a pressure side shell half and a suction side shell half, also called blade halves. The cross-sectional profile of a typical wind turbine blade includes an airfoil for creating an air flow leading to a pressure difference between the sides. The resulting lift force generates torque for producing electricity. Blades are typically made from a fibre-reinforced polymer material and manufacturing methods of these blades often involve pultruded parts, which are composite materials comprised of reinforced fibres embedded in a polymer matrix. They are formed by pulling continuous strands of fibres through a resin bath and bringing the fibres together in a die and then curing them. This results in a composite component that has a high strength-to-weight ratio, consistent properties, and high durability.

Spar caps are an integral part of most modern wind turbine blades, providing blade stability under the high loads experienced by the blades. Strong winds also lead to relatively high rotation speeds, which increases the centripetal forces in the blade.

There are well-known methods for incorporating spar caps in wind turbine blades, but they could be improved, as described in the following.

### SUMMARY

The inventor has found that the load experienced by a wind turbine blade can be improved by providing alternative spar cap configurations. By providing improved load distribution, the present invention may increase for instance annual energy production and blade longevity, meaning that the blade can produce more power over a longer period.

A first aspect provides a wind turbine blade shell portion having a leading edge and a trailing edge and comprising a wind turbine blade root portion, the root portion extending between a root end and a first end along a longitudinal axis of the root portion, wherein the root end is configured for attaching the wind turbine blade shell portion to a wind turbine rotor hub, and wherein the root portion comprises a spar cap having a first outermost edge facing the leading edge of the blade shell portion and a second outermost edge facing the trailing edge of the blade shell portion, wherein the spar cap has a first width *W₁* at a first longitudinal position *P₁* of the root portion and a second width *W₂* at a second longitudinal position *P₂* of the root portion, wherein the first longitudinal position is closer to the root end than the second longitudinal position, and wherein the first width is larger than the second width.

This provides an improved distribution of load in the root portion compared to blade shell regions with known spar caps.

In some embodiments, the root portion comprises fastening means for attaching the blade shell portion to a wind turbine rotor hub, and wherein a distance *d_{f}* between the fastening means and the spar cap is in the range 0-3 meters, such as in the range 0-2 meters, such as in the range 0-1 meter. In some embodiments, the distance *d_{f}* relative to a total length of a wind turbine blade incorporating a root portion in accordance with the first aspect is in the range 0-3 %, such as in the range 0-2 %, such as in the range 0-1 %, such as in the range 0-0.5 %.

In some embodiments, the width of the spar cap decreases monotonically from an end of the spar cap in a direction away from the root end.

A second aspect of the invention provides a wind turbine blade shell portion having a leading edge and a trailing edge and comprising a transition portion, , the transition portion extending between a first end and a second end along a longitudinal axis of the transition portion, the transition portion comprising a spar cap having a first outermost edge facing the leading edge of the blade shell portion and a second outermost edge facing the trailing edge of the blade shell portion, wherein at a first longitudinal position *P₁* in the transition portion, the spar cap extends in a first direction that forms a first angle *α₁* with a chord *C₁* that extends from the leading edge 18 to the trailing edge 20 of the blade shell portion at the first longitudinal position *P₁,* and at a second longitudinal position *P₂,* different from the first longitudinal position *P₁,* the spar cap extends in a second direction that forms a second angle *α₂* with the chord *C₁*, wherein the first angle is different from the second angle. Changing the spar cap along the longitudinal axis of the blade shell portion (amounting to a bend) will often be required as part of the improvement in the load distribution.

In some embodiments, the spar cap extends in a third direction at a third longitudinal position *P₃*, the third direction forming a third angle *α₃* with the chord *C₁*, wherein the second longitudinal position *P₂* is located between the first longitudinal position *P₁* and the third longitudinal position *P₃* and wherein the third angle is different from the second angle. Changing the spar cap in a different direction a second time (effectively amounting to a second bend) can further contribute to an improved load distribution.

In some embodiments, a difference between the first angle *α₁* and the third angle *α₃* is in the range 0-10 degrees, such as in the range 0-5 degrees, such as in the range 0-2 degrees. That is, the spar cap bends back near the first direction, similar to an S-bend. This allows improved load distribution, under the requirement that the spar cap bends back. This may reduce the improvement, but the compromise may be valuable as it can reduce the need for non-rectangular spar cap elements, such as planks, as addressed later in this description.

In some embodiments, a difference between the first angle and the second angle is in the range 0.5-20 degrees, such as in the range 2-20 degrees, such as in the range 2-10 degrees.

In some embodiments, a width of the spar cap varies by at most 10 %, such as by at most 5 %, between the first longitudinal position *P₁* and the third longitudinal position *P₃*. For instance, the width may be constant in the region.

A third aspect provides a wind turbine blade shell portion having a leading edge and a trailing edge and comprising a wind turbine blade tip portion, the tip portion extending between a tip end and a first end along a longitudinal axis of the tip portion, the tip portion comprising a spar cap having a first outermost edge facing the leading edge of the blade shell portion and a second outermost edge facing the trailing edge of the blade shell portion, wherein the spar cap has a first width *W₁* at a first longitudinal position *P₁* of the tip portion and a second width *W₂* at a second longitudinal position *P₂* of the tip portion, wherein the first longitudinal position is closer to the tip end of the tip portion than the second longitudinal position, and wherein the first width is smaller than the second width.

In some embodiments, the width of the spar cap decreases monotonically from the second longitudinal position *P₂* to the tip end.

In some embodiments, a distance between a tip of the spar cap of the tip portion and the tip end of the tip portion is at most 15 meters, such as at most 10 meters, such as at most 5 meters, such as at most 3 meters. This improves load distribution and dampens vibrations that may occur near the tip end.

In some embodiments, the spar cap of the tip portion is configured such that when incorporated in a wind turbine blade, a distance between a tip of the spar cap of the tip portion and the tip end of the blade is at most 15 % of a spanwise length of the blade. In some embodiments, the distance is at most 10 %, such as at most 5 %, such as at most 3 % of the spanwise length of the blade. This improves load distribution and dampens vibrations that may occur near the tip end.

A fourth aspect provides a full-length wind turbine blade comprising a spar cap, the wind turbine blade extending between a blade root end to a blade tip end, the wind turbine blade comprising at least two blade shell portions out of: a blade shell portion in accordance with an embodiment of the first aspect; a blade shell portion in accordance with an embodiment of the second aspect; a blade shell portion in accordance with an embodiment of the third aspect of the invention; the spar cap of the wind turbine blade being comprised of at least the spar caps of said at least two blade shell portions.

Such a blade benefits from the advantages of the different blade shell portions described in relation to the first, second, and third aspect.

In some embodiments, the spar caps of the at least two blade shell portions are configured such that the spar caps of the at least two blade shell portions meet each other, that is, in the blade, one blade shell portion spar cap aligns with another blade shell portion spar cap. Such spar cap configurations provide improved strength and reduces strain along the spar cap of the full-length blade. In some embodiments, the spar cap elements of different blade shell portions are at least partly formed integrally. This is typically the case if the blade is not a segmented blade, that is, is not made from multiple pre-manufactured wind turbine blade segments assembled to form a full blade shell. This allows a full-length spar cap to be made of fewer pieces.

In some embodiments, the full-length wind turbine blade is non-segmented. By not forming the wind turbine blade from multiple pre-manufactured wind turbine blade segments, the blade strength is typically higher and the blade lighter. This is because the spar caps of the different blade shell portions typically have been laid up in the same blade mould with the rest of the blade shell materials and infused and cured in the same infusion and curing process, and no additional components for assembling segments are needed. Although the spar cap portions may be physically separate segments that are combined to form the spar cap of the full-length blade, they are preferably made of elements that are as long as possible. Thus, the different portions should generally be seen as portions of a whole spar cap for a wind turbine blade. For instance, if the spar cap of a full-length blade has a shape that allows use of one or more planks, rectangular or non-rectangular, that extend most of the way through the full-length blade's spar cap from an end of the spar cap nearest the root end of the full-length blade to an end of the spar cap nearest the tip end of the full-length blade, such planks may advantageously be used, since the strength is higher when fewer planks are used. In other words, a root portion and a transition portion and a tip portion of a full-length blade may share the same spar cap elements, such as planks. In some cases, the spar cap could be made as one single piece, for instance by pultrusion.

In some embodiments, the spar cap of the wind turbine blade comprises a first spar cap section with a width having a local maximum at a first spanwise position in the blade. In some embodiments, the first spanwise position (point) at which the first spar cap section has the local maximum width is within a spanwise distance of 20 %, such as within 10 %, such as within 5 %, of a spanwise position (point) at which the full-length blade has a maximum chord length. Such a spar cap provides additional strength in the widest part of the blade. In some embodiments, the first spar cap section comprises two spar cap portions separated in a chordwise direction by a region without a spar cap. This reduces the weight of the first spar cap section.

In the first, second, third, and fourth aspect of the invention, the spar cap may be formed, at least in part, from a first plurality of spar cap elements, wherein the first plurality of spar cap elements comprises at least a first spar cap element and a second spar cap element arranged adjacent to one another in a chordwise direction of the spar cap, wherein:
- the first spar cap element has an edge that forms at least a part of the first outermost edge of the spar cap, and/or
- the second spar cap element has an edge that forms at least a part of the second outermost edge of the spar cap,
at least one of the first spar cap element and the second spar cap element having a width that varies along the longitudinal axis of the blade shell portion.

This allows the spar cap in the wind turbine blade to be formed for instance by using a number of rectangular parts to form a majority part of the spar cap and use non-rectangular spar cap elements that form the outermost edge of the spar cap and provide the overall change in the width of the spar cap in accordance with the respective aspects.

The first spar cap element and the second spar cap element may be arranged in a common plane or they may be arranged in different planes, for instance angled with respect to one another.

The spar cap for a full-length blade may be premanufactured from spar cap elements or it may result from laying up individual spar cap elements in a blade mould before infusion. Premanufacturing a spar cap from spar cap elements can speed up blade manufacturing. Blade material can be arranged in a blade mould, and when the spar cap is needed, it is lifted or otherwise moved into the blade mould. Finally, additional material, if needed, may be placed on top of part of or the entire premanufactured spar cap.

In some embodiments, the varying width of the first spar cap element and/or the second spar cap element provides a respective curve or straight edge in the respective outermost edge that the first/second spar cap element forms a part of. For instance, the first spar cap element forming part of the first outermost edge may be curved or straight and the second spar cap element forming part of the second outermost edge may be curved or straight. Wherever possible, parts of an outermost edge could advantageously be formed using rectangular spar cap elements. However, if the width changes, non-rectangular spar cap elements may be used.

In some embodiments, at least a first part of the spar cap comprises two spar cap portions separated in a chordwise direction of the blade shell portion by a region without a spar cap.

In some embodiments, the first part of the spar cap comprises two spar cap portions separated in a chordwise direction by a region without a spar cap. This reduces the weight of the first spar cap section, while most of the strength provided by the spar cap is maintained. Spar caps can be designed with the boundary condition that the spar cap has such a section.

In some embodiments, at least a second plurality of the first plurality of spar cap elements are fibre-reinforced composite pultrusions, such as carbon fibre pultrusions or glass fibre pultrusions.

Pultrusions can take more load than the same amount of composite material made from unidirectional fabrics. Thus, the use of pultrusions allows manufacturing of lighter blades while maintaining strength in the blade root and improving the load distribution. Further, pultrusions are ideal for use as spar cap elements because they are durable and can be made in any width, thickness, and length. Thicker spar caps can be made by stacking thinner spar cap pultrusions.

Pultrusions can be arranged closer to the bushings, and the wider spar cap provides improved load distribution by distributing the load into a wide range of bushings. Since pultrusions can take more load per material density, this results in a significant reduction in the need for unidirectional fabrics, allowing for a lighter, yet stronger and more robust blade.

For all embodiments, the spar caps may also have a varying thickness in the spanwise direction or in the chordwise direction, such as a thickness tapering.

The skilled person in the field will readily appreciate that at least one of the above aspects of this disclosure and embodiments thereof may be combined with at least one of the other aspects of this disclosure and embodiments thereof, as also exemplified in the description below. Thus, elements from one aspect can be used in other aspects, if compatible.

### BRIEF DESCRIPTION OF THE DRAWINGS

Embodiments of the invention will be described in more detail in the following with reference to the accompanying figures. The figures shall not to be construed as limiting.
Fig. 1 is a schematic perspective view of a wind turbine.
Fig. 2A is a schematic perspective view of a wind turbine blade for a wind turbine as shown in Fig. 1.

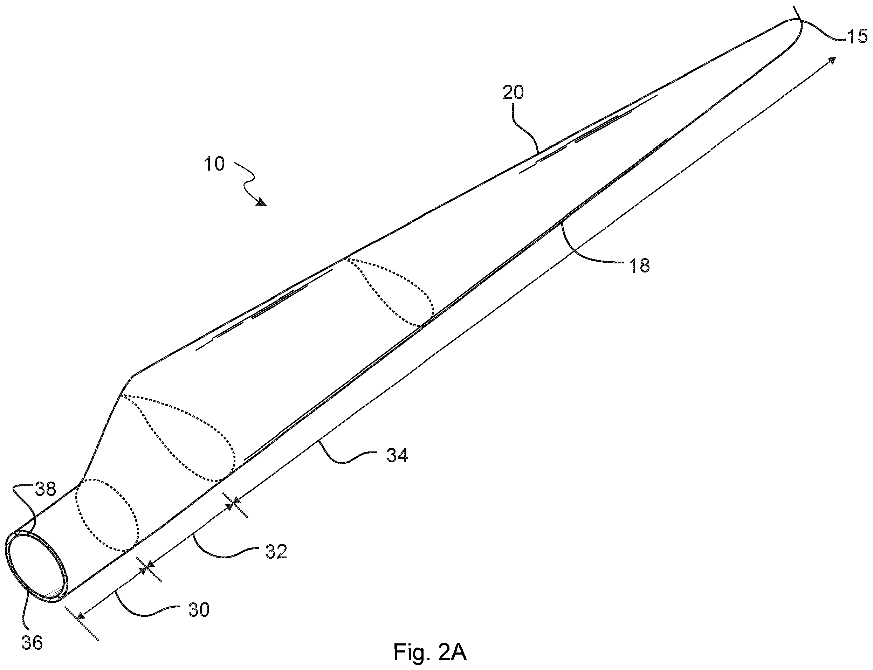

Figs. 2A-2B schematically illustrate spar caps in a wind turbine blade airfoil.

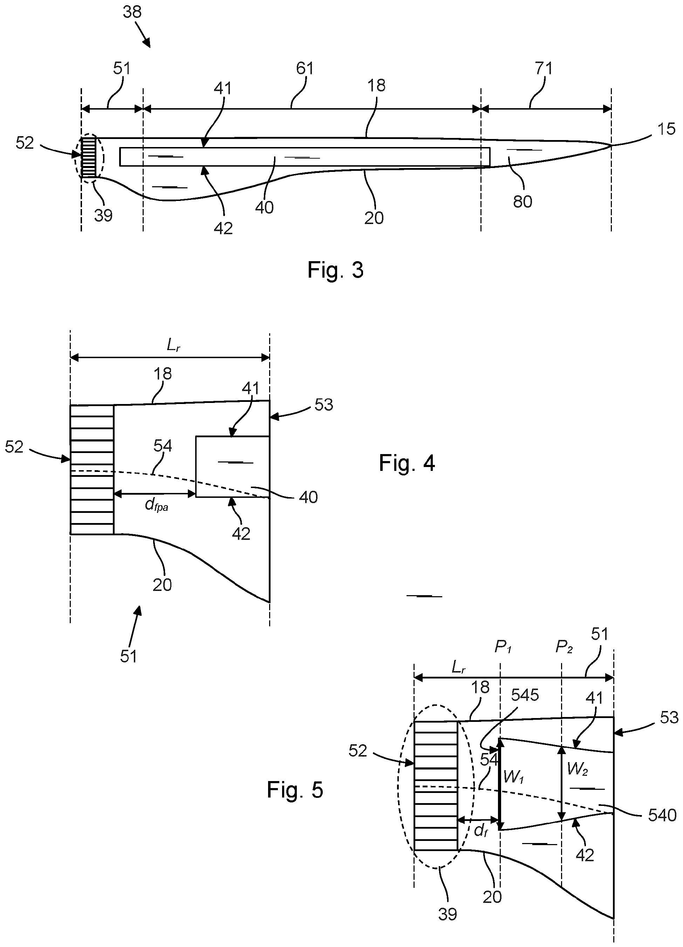

Fig. 3 is a schematic view of a wind turbine blade shell half.
Fig. 4 is a schematic view of a root portion of a wind turbine blade shell portion.
Fig. 5 is a schematic view of a blade shell portion in accordance with the invention, comprising a root portion.

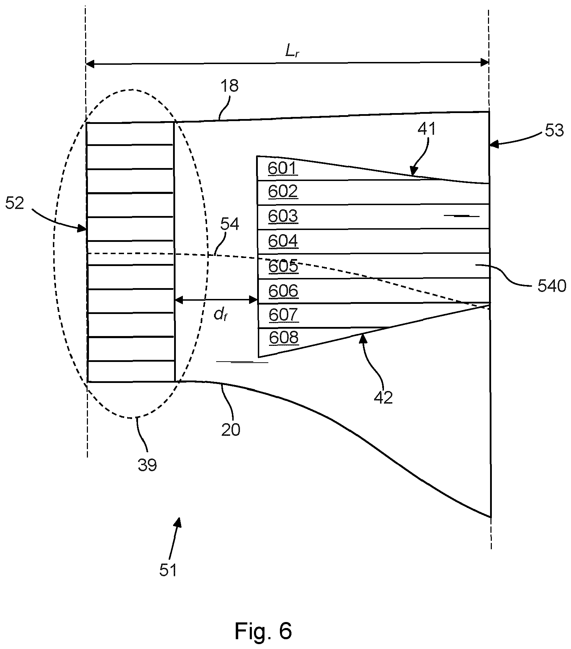

Fig. 6 is a schematic view of a blade shell portion having a root portion in accordance with the invention.

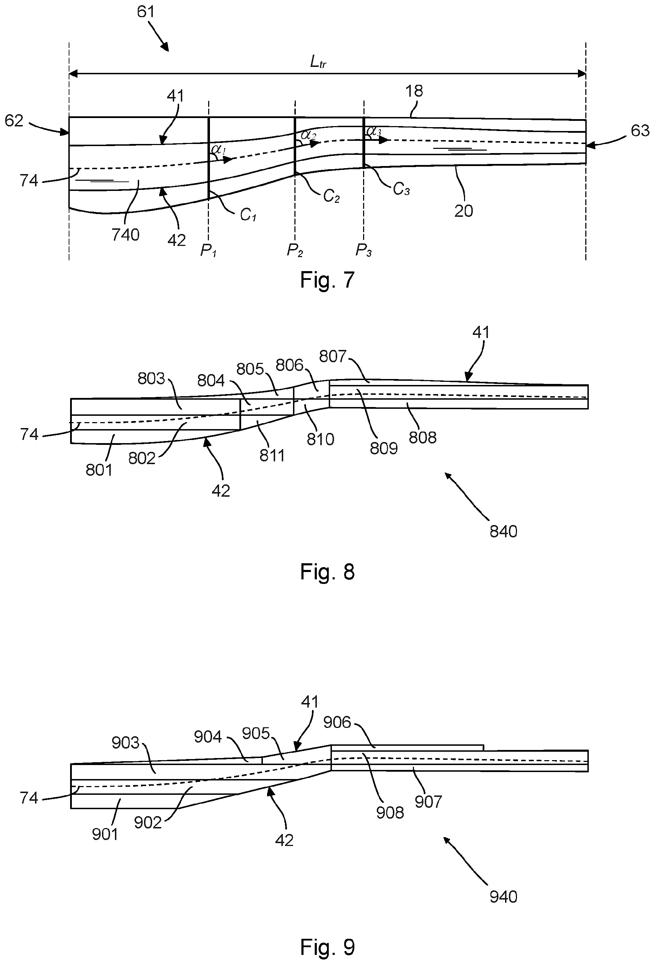

Fig. 7 is a schematic view of a blade shell portion having a transition portion in accordance with the invention.
Fig. 8 is a schematic view of a spar cap for a blade shell portion having a transition portion.
Fig. 9 is a schematic view of another spar cap for a blade shell portion having a transition portion.

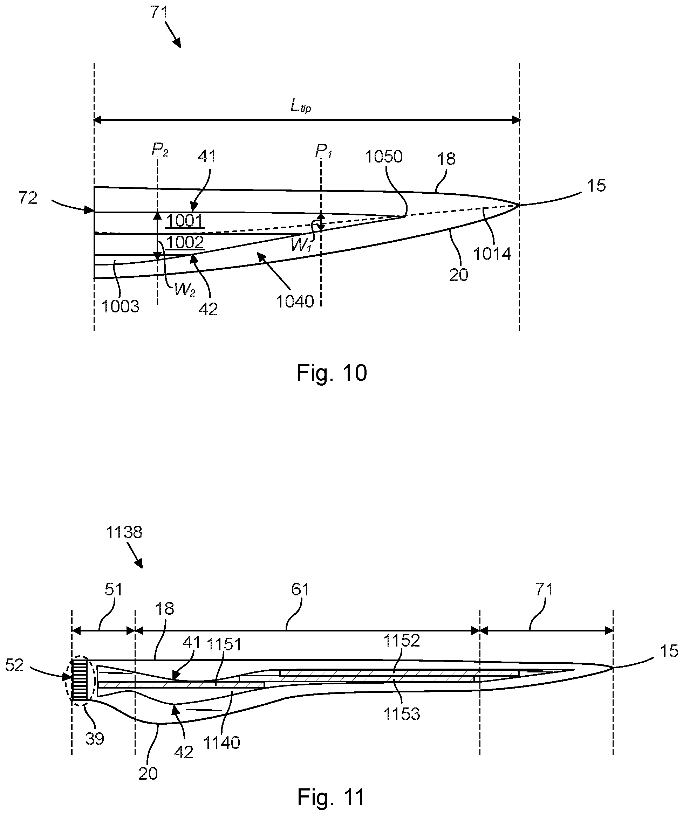

Fig. 10 is a schematic view of a blade shell portion having a tip portion in accordance with the invention.
Fig. 11 is a schematic view of a wind turbine blade shell combining aspects of the invention.

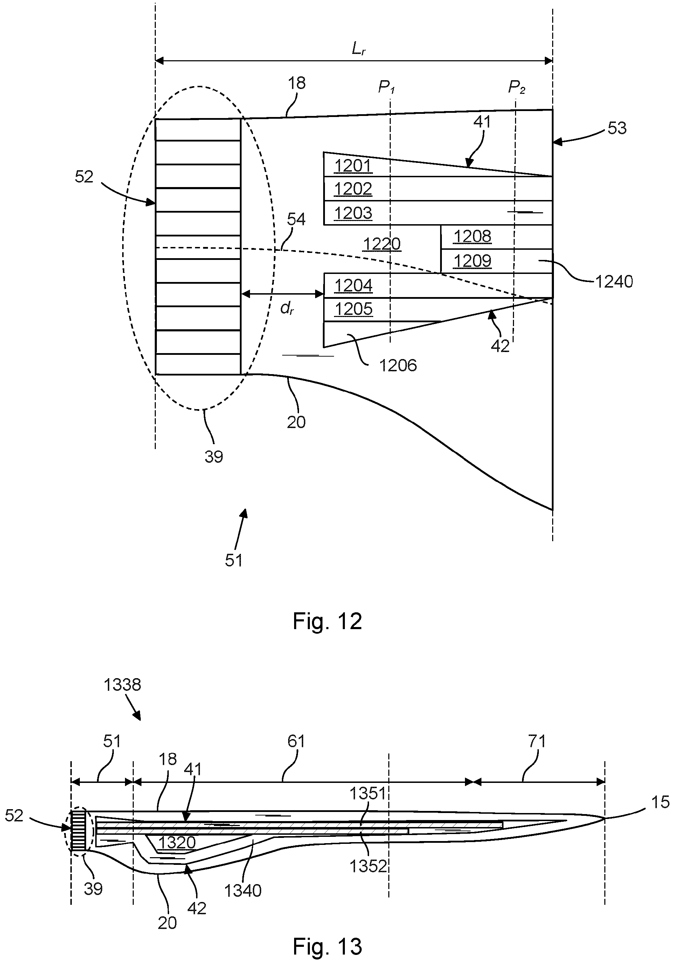

Fig. 12 is a schematic view of another blade shell portion in accordance with the invention.
Fig. 13 is a schematic view of another blade shell portion in accordance with the invention.

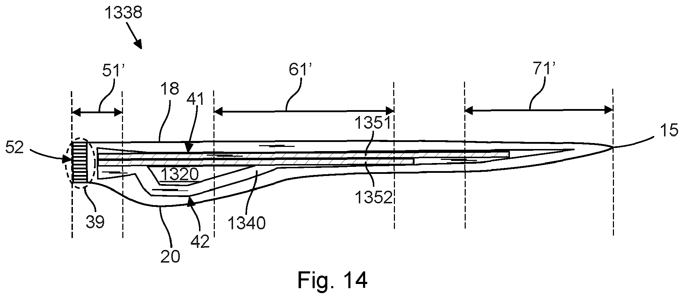

Fig. 14 is a schematic view of a blade shell portion in accordance with the invention.

### DETAILED DESCRIPTION

In the following description, same reference numbers refer to the same or corresponding elements and are thus not necessarily described in relation to all figures.

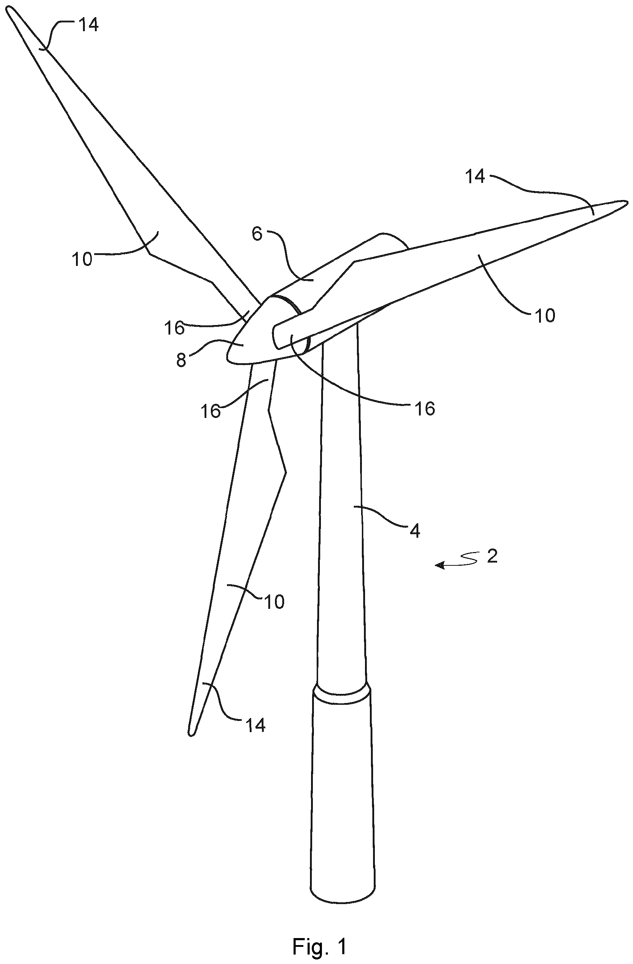

Fig. 1 illustrates a conventional modern upwind wind turbine 2 according to the so-called "Danish concept" with a tower 4, a nacelle 6 and a rotor with a substantially horizontal rotor shaft which may include a tilt angle of a few degrees. The rotor includes a hub 8 and three blades 10 extending radially from the hub 8, each having a blade root 16 nearest the hub and a blade tip 14 furthest from the hub 8.

Fig. 2A shows a schematic view of an exemplary wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub 8, and a trailing edge 20 facing the opposite direction of the leading edge 18.

The airfoil region 34 (also called the profiled region) preferably has an ideal shape with respect to generating hub rotation, whereas the root region 30 due to structural considerations has a substantially circular or elliptical cross-section, which for instance makes it easier and safer to mount the blade 10 to the hub. The diameter of the root region 30 may be constant along the entire root region 30 or may taper. The transition region 32 in the wind turbine blade 10 in this example has a transitional profile gradually changing from the circular shape of the root region 30 to the airfoil profile of the airfoil region 34. The chord length in the transition region 32 typically increases in an outward direction from the hub. The airfoil region 34 has an airfoil profile with a chord extending between the leading edge 18 and the trailing edge 20 of the blade 10. The chord length in the airfoil region typically decreases in the direction of the tip end 15.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub. Reflecting this, a given chord is often referred to as a "local chord". This is well known.

The wind turbine blade 10 may for instance comprise one or more blade shell parts, for instance two blade shell parts, a first blade shell part 36 and a second blade shell part 38, for instance made at least partly of fibre-reinforced polymer. The polymer may comprise or consist of at least one of polyester, epoxy, vinyl ester, or polyurethane. The first blade shell part 36 may for instance be part of a pressure side or upwind blade part. The second blade shell part 38 may for instance be part of a suction side or downwind blade part. The first blade shell part 36 and the second blade shell part 38 are typically joined together, such as glued together, along bond lines or glue joints extending along the trailing edge 20 and the leading edge 18 of the blade 10.

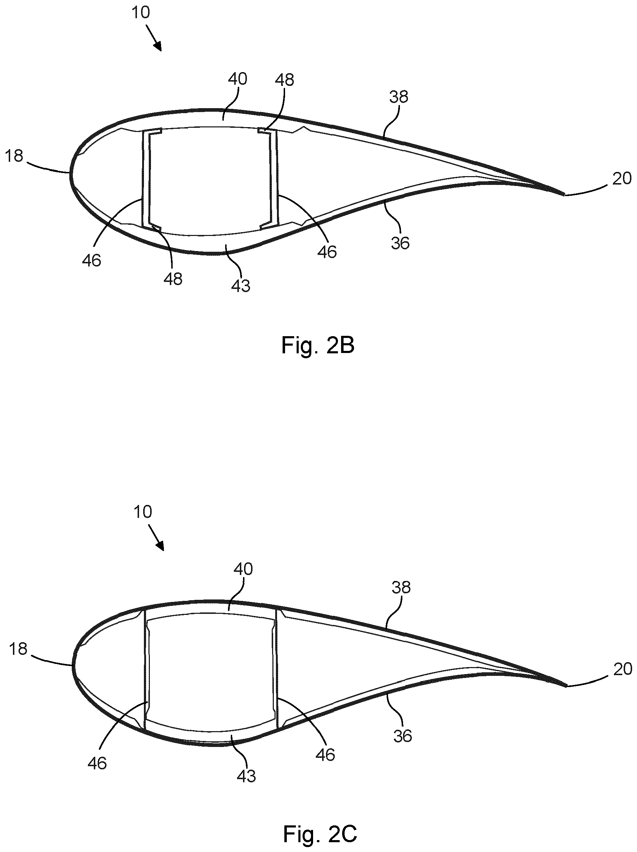

Fig. 2B illustrates an airfoil of a wind turbine blade 10. As mentioned above, the blade shell may for instance be formed from a pressure side shell part 36 and a suction side shell part 38, each moulded in a dedicated shell mould by laying up material and infusing resin into the material in a resin infusion process, such as vacuum assisted resin transfer infusion moulding (VARTM). After curing, the pressure side shell part 36 and the suction side shell part 38 are bonded together at bond lines defined by the leading edge 18 and the trailing edge 20 of the wind turbine blade 10. The shell is usually made of layers, for instance glass fibre mats, with an exterior gel coat. The strength to withstand loads, for instance from wind, is primarily provided by one or more beam structures. Such beam structures may for instance comprise opposing spar caps 40, 43 with one or more shear webs 46 connecting the opposing spar caps 40, 43. The spar caps 40, 43 are configured to handle flapwise and edgewise forces. Spar caps are typically formed from fibre-reinforced composite material, such as layered fibre mats and/or one or more pultrusions. Spar caps 40, 43 are often relatively thick compared to other parts of the shell. The spar caps 40, 43 in Fig. 2B and spar cap portions 40, 43 in Fig. 2C are sometimes referred to as main laminates, since they provide most of the strength to the shell. The thickness of the spar caps 40, 43 may be an order of magnitude thicker than other parts of the shell.

The one or more shear webs 46 handle shear forces and are typically formed from fibre-reinforced composite material or a core material sandwiched between fibre material.

Fig. 2C illustrates a beam structure manufactured separately from the shell or shell parts 36, 38. The separately manufactured beam structure, for instance in the form of a "spar box", has two spar cap portions 40, 43 that provide strength in a corresponding side of the shell. The spar caps in the separately manufactured beam structure are connected by integrated shear web portions 46.

Accordingly, spar caps 40, 43 may be integrated into or embedded within the shell and the one or more shear webs 46 may be manufactured separately and subsequently adhered to interior surfaces of, or adjacent to, the integrated spar caps 40, 43, for example via web flanges 48. Such an arrangement is shown in Fig. 2A. Alternatively, the beam structure can be manufactured separately from the shell or shell parts 36, 38. The separately manufactured beam structure can then subsequently be adhered to interior surfaces of the shell. This is illustrated in Fig. 2C.

Fig. 3 illustrates schematically a suction side shell part 38 of a known wind turbine blade shell. Only elements relevant for the present invention are illustrated. The suction side shell part 38 extends from a root end 52 to a tip end 15 and comprises a spar cap 40 that provides structural strength. In some blades, the spar cap cooperates with a shear web inside the blade shell. Spar caps are usually made of fibre-reinforced composite material, i.e. fibres embedded in a hard polymer matrix ("composite"). For the purpose of the description below, the blade shell part is schematically divided into a blade shell portion having a root portion 51, a blade shell portion having a transition portion 61, and a blade shell portion having a tip portion 71. Three aspects of the invention relate to these respective blade shell portions.

In the example in Fig. 3, the spar cap has been premanufactured and has then been arranged on top of other blade materials 80, such as fibre glass material or carbon fibre material or other material, in preparation for an infusion process that joins the spar cap and the other blade materials into an integral shell part. The premanufactured spar cap can for instance be made from pultruded parts, for instance shaped as planks (also known as strips). The spar cap may also comprise premanufactured composite material made in other ways, such as by laying up fibre mats in a mould and infusing them with resin and curing the resin.

The spar cap has a first outermost edge 41 facing the leading edge 18 of the blade shell portion and a second outermost edge 42 facing the trailing edge 20 of the blade shell portion.

Additional material is often placed on top of the spar cap before a final infusion that embeds the spar cap as part of the blade shell. At some point, fastening means for fastening the final blade to a wind turbine hub are incorporated. This is typically done during the process of laying up fibre material, spar cap material, and other materials, such as various metal elements, before the final resin infusion is carried out. Thus, the fastening means 39 become embedded in composite material. In Fig. 3, the fastening means are exemplified by bushings 39. Their visibility in this example shall not be construed as limiting.

As illustrated by the known shell part in Fig. 3, spar caps are arranged some distance from the fastening means, such as bushings 39, to allow room in which to transfer the concentrated loads from the spar cap to the wider region comprising the bushings, which are typically distributed evenly around the root.

Further, the blade in Fig. 3 does not contain a spar cap near the tip end 15 since the shell profile is narrower towards the tip and cannot accommodate normal spar caps. Thus, dynamic effects such as twisting and bending in the tip end are ongoing problems. The present invention allows improved handling of loads, such that twisting and bending near the tip is reduced, which in turn reduces fatigue caused by deflections. Further, the improvement reduces the risk of tower strike, where a blade, as a result of a number of adverse circumstances, strikes the wind turbine tower.

The conventional spar cap 40 shown schematically in Fig. 3 also has a uniform width along a large portion of the suction side shell part 38. Pultruded planks for a spar cap can easily be made longer than the entire length of the newest wind turbine blades. Thus, where possible, long planks are advantageously used, as this will achieve the highest strength and minimise the number of spar cap elements needed.

Spar caps are designed to provide sufficient strength. The present invention is based on the realisation that spar caps can be designed using less spar cap material while still achieving the same strength and in addition also an improved response to load, especially an improved distribution of load when the blade is in operation at a site.

Fig. 4 illustrates a blade shell portion that is a root portion 51 of a blade shell half having the conventional spar cap 40 of Fig. 3. The blade shell portion has a length *Lᵣ* and extends from the root end 52 to a first end 53. It is noted that the first end 53 can be a tip end of a blade, so the blade shell portion is a full blade shell part, such as a blade shell half, e.g. a blade suction side or a blade pressure side. Alternatively, the root portion may be a segment as such, such as for a segmented wind turbine blade.

Fig. 4 also shows the root portion's longitudinal axis 54, which in the present description follows the halfway point between the leading edge 18 and the trailing edge 20 in the spanwise direction.

As shown in Fig. 4, the spar cap of the prior art ends some distance *d_{fpa}* from the fastening means 39. Further, it has a uniform width, i.e. the distance between the first outermost edge 41 and the second outermost edge 42 of the spar cap is the same along this part of the spar cap. A problem with the conventional design is that although it is relatively easy to implement using premanufactured planks with a uniform width, the uniformity in width means that the load from external forces, including wind forces and centripetal forces during hub rotation, are not distributed optimally. As a result of the somewhat crude placement and shape of conventional spar caps, some portions of the blade shell are stiffer than necessary, and other portions are less stiff, which results in an ongoing internal strain during operation and allow vibrations to occur. Both these effects cause fatigue.

The present invention alleviates this problem by providing spar cap designs that improve load distribution. The inventor has realised that different solutions to this problem are required in different parts of a wind turbine blade. Accordingly, the invention provides aspects that are associated with the blade part addressed. However, the aspects relate to the same problem, namely reducing fatigue in a wind turbine blade shell.

Fig. 5 shows schematically an embodiment of the first aspect of the invention, providing an improved distribution of load in the root portion 51. The root portion 51, which is a blade shell portion, in this case overlaps the root region 30 illustrated in Fig. 2. Centripetal forces cause a high load on the bushings 39 in the root portion. At the same time, this portion has a very high strength. The embodiment in Fig. 5 takes advantage of this by distributing forces from the spar cap across several bushings, leading to an improved load distribution.

The spar cap also handles forces working on other parts of the blade. The improved communication of forces between the spar cap 540 and the bushings 39 relieves strain on the spar cap. This results in the advantage that the spar cap is better able to distribute load acting on it further from the root portion 51. Blade portions in the conventional design that could have contributed for instance more strength, do so in embodiments of the invention, and parts in the conventional design that contributed more strength than necessary, are partly relieved by the flexible design provided by the present invention. By distributing the load, fatigue is reduced.

The embodiment in Fig. 5 has a spar cap, the width of which increases in the direction towards the fastening means 39 (i.e. towards the root end 52). That is, the distance between the first outermost edge 41 and the second outermost edge 42 of the spar cap increases in the direction towards the fastening means.

In some embodiments, the width of the spar cap increases monotonically in the root portion 51 towards the root end 52, up to the end 545 of the spar cap nearest the root end 52, as shown in the example in Fig. 5. That is, the width does not decrease in the direction towards the root end. In some embodiments, the width increases strictly monotonically, that is, the spar cap continues to widen towards the root end 52 in the root portion 51, which is also the case in the example in Fig. 5. A width that increases monotonically results in a better distribution of the load, leading to a lower local strain within the root portion 51 compared to the conventional spar cap. A root portion spar cap as in Fig. 5, especially when made of pultrusions, allows the distance *d_{f}* between the spar cap 540 and the fastening means 39 to be reduced compared to what is possible with a conventional spar cap, as illustrated by the larger distance *d_{fpa}* in Fig. 4 compared to the distance *d_{f}* shown in Fig. 5.

Fig. 6 illustrates schematically another advantageous embodiment of the present invention. The non-uniform width of the spar cap 540 in Fig. 5 requires some changes to the manufacturing method. There will be regions in which planks, which have a uniform width due to the way they are manufactured, are not suitable for forming a spar cap with the desired shape, such as spar cap 540 in Fig. 5. The desired shape, typically subject to certain boundary conditions, can be obtained by modelling the blade in advance based on the mechanical properties of the different wind turbine blade materials, including glass fibre composites, carbon fibre composites, metals (such as copper). Generally, a suitably designed spar cap providing improved load distribution within the blade has a non-uniform width, as exemplified by spar cap 540.

In the following, spar caps made of spar cap elements in accordance with selected embodiments of the invention are described. The description is schematic in that the blades are not drawn to scale or size and actual spar cap elements may have any desired size. The actual number of spar cap elements required may be higher or lower dependent on the size of the spar cap elements and the blade. For clarity, only a few spar cap elements are illustrated. Thus, no limitation shall be inferred from the number, the shape, or the size of spar cap elements illustrated in the following. Further, spar cap elements may be stacked to provide sufficient strength, depending on the need and the thickness of individual spar cap elements. A detailed description of the thickness is left out for clarity.

To form this spar cap, rectangular planks 603-606 are used to make up a significant part of the spar cap 540. As illustrated in Fig. 5, the non-uniform width of the spar cap is, according to some embodiments of the invention, provided by using spar cap elements 601-602 and 607-608 that have a varying width, i.e. they have a width that varies in the direction from the first end 52 to the second end 53 of the blade shell portion, as seen from Fig. 6. Such spar cap elements may be non-rectangular when seen in a direction normal to a plane defined by a thickness direction of the spar cap element. Spar cap elements may for instance have a thickness in the range 5-10 mm; a width for instance in the range 50-150 mm; and a length for instance above 1 m, such as in the range 1 m-150 m, such as in the range 3 m-150 m. This is usually insufficient for spar caps, which are significantly wider than 50-150 mm. Thus, spar cap elements are arranged next to one another in a chordwise direction.

Non-rectangular spar cap elements 601-602 and 608-611 form part of the first outermost edges 41 and 42 of the spar cap 540 and give the spar cap 540 the desired shape. The non-rectangular spar cap elements can for instance be modified rectangular planks or they can be manufactured by other methods. These modified planks are adapted to provide the required variation in the spar cap's width. A modified plank may for instance be made from a rectangular plank by machining off part of the plank, for instance by cutting and/or grinding and/or sanding. A plank may have a rectangular or non-rectangular cross-section normal to a length axis of the plank and/or a rectangular or non-rectangular cross-section in its width direction. A plank width may for instance be in the range 50-200 mm, such as in the range 50-150, such as 100 mm. Planks may have different lengths, as also exemplified in the present description. The length may be pre-determined at manufacturing, or obtained by shortening longer planks. A plank length may for instance be in the range 50-150 meters. Some planks may be shorter, such as in the range 1-5 meters, or even shorter. Short planks can be necessary to complete a complicated spar cap design. Other dimensions may be necessary, in some cases.

Non-rectangular spar cap elements 601-602 and 607-608 form part of the first outermost edge 41 of the spar cap 540 and provide part of the required width increase. In this example, they are arranged adjacent one after the other in a common plane. Spar cap elements 601-602 provide a curved outermost edge 41. Such spar cap elements are more time-consuming to manufacture, but they have the advantage that they allow greater precision in distributing the load exerted on and within the blade. Fig. 12, described below, uses non-rectangular spar cap elements having straight edges. Straight edges are significantly easier to manufacture than curved spar cap elements. For instance, a rectangular plank can be cut at the required angle to form the straight edge. In Fig. 6, the second outermost edge 42 is straight and is made from spar cap elements 607-608 that have straight edges.

Fig. 7 illustrates schematically another aspect of the inventive concept. Like the blade shell portion in Fig. 5, it solves the problem of reducing fatigue within a wind turbine blade. This aspect applies to an intermediate portion of a blade, typically including at least a portion of the airfoil region 34 (shown in Fig. 2) that provides lift during operation. Like the root portion 51 in Fig. 5, the transition portion 61, which is a blade shell portion, has a specially designed spar cap 740 that improves the load distribution compared to a straight spar cap. The transition portion 61 extends from a first end 62 to a second end 63. The transition portion 61 may for instance be a segment as such for a segmented wind turbine blade, but it may also be part of a full-length blade. In that case, the first end 62 is a root end 52 such as that shown for instance in Fig. 3 and the second end 63 is a tip end 15 such as that shown for instance in Fig. 3. Alternatively, the first end 62 is a root end 52 and the second end 63 is configured to engage with a first end of a tip portion 71, such as the tip portion described in relation to Fig. 10, to form an entire blade (or a side of a blade) of the segmented type. Fig. 7 also shows the longitudinal axis 74 of the transition portion 61.

In the transition portion 61, having a length *Lₜᵣ,* the improvement of the load distribution is brought about by a bend in the spar cap, i.e. the spar cap is not straight but changes direction (in this example twice) along the blade shell portion 61 as seen in Fig. 7, unlike the conventional spar cap shown in Fig. 3.

At a first longitudinal position *P₁* of the spar cap 740, the spar cap's direction, indicated by the arrow at position *P₁,* forms a first angle *α₁* with a local chord *C₁* of the blade shell portion 61 at the first longitudinal position *P₁.* As mentioned above, the inventor has found that load distribution can be improved in the intermediate region by having a spar cap 740 that has a bend. Accordingly, at a second longitudinal position *P₂,* the spar cap 740 extends in a second direction different from the first direction. The second direction forms a second angle *α₂* with the chord *C₁*. The change in direction is reflected in that the first angle *α₁* is different from the second angle *α₂.* The angles could be measured with respect to any arbitrary reference, not just the chord *C₁*.

The bend in the spar cap 740, illustrated only schematically in Fig. 7, allows optimization of the load distribution, as it is rarely, if ever, ideal to use a straight spar cap.

It is noted that the longitudinal axis 74 of the blade shell portion 61 and a longitudinal axis of the spar cap almost coincide in this example. This is coincidental and needs not be the case.

In the example in Fig. 7, the spar cap 740 has a second bend following the first bend. In this example, the second bend turns the spar cap into a direction similar to the direction corresponding to angle *α₁* at the first longitudinal position *P₁.* For instance, the first angle *α₁* and the third angle *α₃* at longitudinal position *P₃*, may differ by at most 10 degrees, such as at most 5 degrees, or they may be substantially equal. The latter case can be seen as a shift in the longitudinal axis of the spar cap between the first longitudinal position *P₁* and the third longitudinal position *P₃*.

A second bend, such as in the opposite direction of the first bend (first a left turn, then a right turn, or vice versa), is useful in many current wind turbine blades where the advanced shape requires one stiffness at a broad part of the blade and another stiffness in a narrower part of the blade. A chordwise shift in the spar cap in accordance with the invention provides better load distribution in view of the change in airfoil shape and size in the direction towards the tip end 15. Further, by providing a shift as such, i.e. having *α₃* = *α₁,* the spar cap 740 can, to a higher degree, be made from rectangular spar cap elements and to a lesser degree from non-rectangular spar cap elements. Thus, the improvement can be manufactured more easily than without a shift.

The width of the spar cap 740 in the example in Fig. 7 decreases gradually from the first end 62 to the second end 63, as reflected by the decreasing distance between the first outermost edge 41 and the second outermost edge 42 of the spar cap 740. The blade shell portion 61 is suitable for having a tip portion attached at the second end 63, and the shape of the spar cap 740 actually takes into account that the tip portion 71 shown in Fig. 10 is connected. The spar cap 740 narrows in a fashion suitable not only for reducing fatigue in the transition portion 61, but also for incorporation of the tip portion 71 with reduced fatigue.

Fig. 8 illustrates schematically a configuration of spar cap elements forming a spar cap 840 that has essentially the same shape as the desired spar cap design 740 shown in Fig. 7. Rectangular spar cap elements 802-804 and 808-809 may for instance be composite pultrusions in the form of rectangular planks that make up a large part of the spar cap 840. A number of curved elements 801, 805-807, and 810 are required in order to mimic the spar cap design 740 shown in Fig. 7. Although it mimics the spar cap shape 740 well, curved spar cap elements are time-consuming to make, as mentioned above, and require additional manufacturing time.

Fig. 9 illustrates schematically a configuration 940 of spar cap elements that alleviates the complications associated with the curved spar cap elements in Fig. 8. The configuration 940 consists of rectangular spar cap elements 906-908 and non-rectangular spar cap elements 901-905 having straight edges that contribute to the change in width of the spar cap and to the bend in the geometry of the spar cap 740. As described above, spar cap elements with straight edges are less complicated to manufacture than spar cap elements with curved edges and are thus preferred (if the design allows the approximation that they introduce if they replace curved edges). To form a non-rectangular spar cap element with a straight edge, a rectangular plank can be cut with a straight cut with the required angle at the required position.

Since the spar cap 940 approximates the spar cap design 740, it largely offers the same degree of improvement. If required, curved spar cap elements can be used. However, in many cases, the simplification in the manufacturing process obtained by avoiding curved spar cap elements outweighs the slight reduction in improvement compared to the ideal design.

It is also noted that the spar cap in Fig. 9 has 8 spar cap elements compared to the more "precise" spar cap 840, which has 11 spar cap elements. The lower number of components is an additional advantage, as it is generally preferred to work with as few individual elements as possible. It can also rely on longer elements, which leads to higher strength of the spar cap 940.

Fig. 10 illustrates schematically a third aspect of the inventive concept. Like the blade shell portions 51 and 61 in Figs. 5 and 7, the aspect solves the problem of reducing fatigue, in this case in the tip portion 71, which is a blade shell portion. It has been a problem that spar caps have not been incorporated closer to the tip end of blades, let alone in an optimal way. A blade shell portion forming part of the tip of a wind turbine blade experiences both twisting forces and bending forces during operation, and blade tips are known to be susceptible to vibrations under certain blade-specific operating conditions. Fig. 10 illustrates implementation of a spar cap 1040 in accordance with the third aspect of the invention.

The tip portion 71 has a length *Lₜᵢₚ* and extends from a tip end 15 to a first end 72 and has a longitudinal axis 1014. The first end 72 may be a root end 52 of a blade, so the blade shell portion 71 is a full-length blade shell part, such as a blade shell half, such as a blade suction side or a blade pressure side. Alternatively, the tip portion 71 may be a segment as such, such as for forming a spanwise outermost portion of a segmented wind turbine blade.

In the example in Fig. 10, curved spar cap elements 1001 and 1003 are used together with a non-rectangular spar cap element 1002 having a straight edge. The straight edge of spar cap element 1002 approximates a slight curve in the optimal design, but renders manufacturing of the spar cap 1040 easier. Spar cap element 1003 could be left out or be made to have a straight edge as an approximation, but either would negatively affect the improvement in load distribution that spar cap element 1003 provides. Therefore, a curved spar cap element is used.

A distance between the tip of the spar cap 1040 and the tip end 15 may for instance be at most 15 % of a total length of a wind turbine blade incorporating the tip portion 71 of Fig. 10. In some embodiments, the distance is at most 10 %, such as at most 5 % of the blade length. This improves load distribution and dampens vibrations that may occur near the tip end 15. In some embodiments, the distance is at most 5 meters, such as at most 3 meters.

As described above, the load distribution in the root region 30, the intermediate region 34, and the region near the blade tip 15, can be improved by applying the designs described above. Fig. 11 illustrates schematically a blade shell half 1138, such as a full-length suction side half of a wind turbine blade, that implements the inventive aspects in the root region 30 (represented by root portion 51), in the intermediate region (represented by transition portion 61), and the tip region (represented by tip portion 71), in accordance with a fourth aspect of the invention. In the root portion 51, the spar cap 1140 widens towards the fastening means 39. In the transition portion 61, the spar cap 1140 bends to allow the spar cap to be positioned optimally at each spanwise position along the transition portion 61 and line up for an improved tip portion 71. In the tip portion 71, the spar cap narrows towards the tip in a way that takes into account both the shape and the relatively small size of the airfoils near the tip end 15. Thus, the spar cap in this example primarily continues near the leading edge 18 of the blade shell half 1138 in the tip portion 71 and to a lesser degree towards the trailing edge 20. An implementation of the spar cap design 1140 with spar cap elements is not shown in detail, but the principles described in relation to the implementations in Figs. 6 and 8-10 are advantageously adhered to. Fig. 11 also illustrates schematically how large parts of the spar cap 1140 may be formed by relatively long rectangular spar cap elements 1151, 1152, 1153 that extend through a relatively large part of the blade shell half 1138. The remaining parts of the spar cap may be formed with smaller spar cap elements (not shown), some of which may be non-rectangular in order to provide the varying width and varying direction of the spar cap 1140. It is seen that the spar cap element 1151 extends from the end of the spar cap 1140 nearest the root end, which is part of the root portion 51, into the transition portion 61 of the spar cap 1140. Similarly, the spar cap element 1152 extends from the transition portion 61, into the tip portion 71 as far as possible, until smaller spar cap elements may be used to form the remaining part of the tip portion 71 of the spar cap 1140. This illustrates that the portions 51, 61, and 71 are not necessarily made from separate spar cap parts that are joined together. In fact, spar caps in accordance with the invention are preferably made as a single spar cap, or, when made using several spar cap elements, such as planks, made with spar cap elements that extend as far as possible in the spanwise direction, as this provides higher strength of the complete spar cap. This way, a spar cap element, such as spar cap element 1152, is an integral part of both the transition portion 61 and the tip portion 71. Similarly, the spar cap element 1151 is an integral part of both the root portion 51 and the transition portion.

Fig. 12 schematically illustrates an alternative embodiment of a spar cap for improved load distribution in a root portion 51. It is similar to the embodiment shown in Fig. 6, but incorporates a region 1220 without spar cap elements. This split of the spar cap into two spar cap portions separated in the chordwise direction of the blade shell portion reduces the spar cap stiffness in that region while still providing an improved distribution of load as described in relation to Fig. 6. As can be seen from Fig. 12, the distance between the two outermost edges 41 and 42 increases similarly to Fig. 6 and the same effects are contributed. However, in the design in Fig. 12, the choice of configuration of spar cap elements also takes into account that the spar cap must not contribute too much stiffness, and the width increase of approximately 60 % from the first end 53 to the end of the spar cap nearest the fastening means 39 is compensated by splitting the spar cap into two portions separated by a region without spar cap elements.

Depending on the detailed structure of the root region and other factors, a design closer to that in Fig. 6 might be advantageous, while in some cases the design in Fig. 12 may be more suitable. Both examples are schematic, and for a given blade, the most suitable design will be different from both schematic figures.

In the example in Fig. 12, the spar cap 1240 is made of spar cap elements that are either rectangular (spar cap elements 1202-1204 and 1208-1209) or are non-rectangular with straight edges (spar cap elements 1201 and 1205-1206), resulting in outermost spar cap edges 41, 42 that are straight. As described above, spar cap elements with straight edges are easier to manufacture, making the spar cap 1240 easier to make than if spar cap elements with curved edges were included as the design in Fig. 5 prescribes for the best improvement in the load distribution.

Fig. 13 illustrates a wind turbine blade shell half 1338 with a spar cap 1340. The baseline is the prior-art blade shell portion 38 shown in Fig. 3. Compared to the blade shell portion 38 shown in Fig. 3, the blade shell half 1338 implements the wider spar cap near the fastening means 39 in accordance with the first aspect of the invention, a transition portion 61 in accordance with the second aspect of the invention, and the spar cap narrows in a tip region 71 in accordance with the third aspect of the invention. Further, the spar cap 1340 includes a region 1320 that separates two spar cap parts. The design, including the separated spar cap parts, provides improved load distribution based on the effects described above. Further, the two spar cap parts separated by region 1320 in the widest part of the blade shell half 1338 provide improved load distribution by communicating bending and torsional forces effectively between the leading edge 18 and the trailing edge 20 in that region. Various portions of the spar cap have been approximated so that larger, rectangular spar cap elements can be used, including around the region 1320. Fig. 13 also illustrates schematically how large parts of the spar cap 1340 may be formed using relatively long rectangular spar cap elements 1351, 1352 that extend through a relatively large part of the blade shell half 1338. The remaining parts of the spar cap are formed with smaller spar cap elements (not shown), some of which may be non-rectangular in order to provide the varying width and varying direction of the spar cap 1340. It is seen that the spar cap element 1351 extends from the end of the spar cap 1340 nearest the root end, which is part of the root portion 51, through the transition portion 61 of the spar cap 1340, and into the tip portion, thus forming part of each of these spar cap portions. Spar cap element 1352 also extends from the end of the spar cap 1340 nearest the root end, through the transition portion 61 of the spar cap 1340, and into the tip portion 71, thus forming part of each of these spar cap portions. As mentioned, the use of large spar cap elements improves strength. Due to the complicated shapes of the spar caps 1140 and 1340, they are advantageously manufactured before the respective blade halves 1138 and 1338 are laid up, and the spar caps 1140 and 1340 are then lifted into the mould when needed.

The spar cap 1340 can be made as a single element, or it can be made of several elements. For instance, the large portion of the spar cap 1340 closer to the leading edge 18 of the blade, extending from the root portion 51 and almost to the tip end 15, could be made as one piece, and the rest, including the spar cap part closer to the trailing edge 20, could be made as another piece. These can then be laid up in a mould to form the complete spar cap 1340 during layup of materials for the blade shell half. Forming the spar cap 1340 as a single piece rather than multiple pieces increases the strength of the spar cap.

Although a large portion of the spar cap design 1340 in Fig. 13 can be made of rectangular planks, the design also requires a certain number of non-rectangular planks. The cost of manufacturing the required non-rectangular spar cap elements is in some cases outweighed by the improved load distribution because the power output increases and because the longevity of the blade is increased.

Figs. 11 and 13 are embodiments that have the additional feature that the respective spar cap has a width with a local maximum width in the vicinity of the point at which the blade has a maximum chord length. In both figures, the point of maximum chord length coincides with the reference lines for the leading edge 18 and the trailing edge 20, and the point of the local maximum in the spar cap width is illustrated by the reference lines for the first outermost edge 41 and the second outermost edge 42. In Fig. 11, the distance between the maxima is about 3.8 % of the total length of the blade. In Fig. 13, the distance between the maxima is about 5.3 % of the total length of the blade. Such configurations of the spar cap provide additional improvement of the load distribution, together with additional strength to the blade in that region. The distances may be higher or lower.

As described in relation to Figs. 11 and 13, the portions 51, 61, and 71 can be, but typically are not, made from separate spar cap parts that are joined together. This is further illustrated by Fig. 14, which illustrates that the root portion, the transition portion, and the tip portion are defined by the shape of the spar cap in the respective portions, rather than being separate parts. Fig. 14 illustrates the same blade as Fig. 13, but the root portion 51', the transition portion 61', and the tip portion 71' are delineated differently. Nevertheless, the portion 51' is a root portion in accordance with the first aspect of the invention, the portion 61' is a transition portion in accordance with the second aspect of the invention, and the portion 71' is a tip portion in accordance with the third aspect of the invention.

**LIST OF REFERENCES**

| | | | |
|---|---|---|---|
| 2 | wind turbine | 40 | spar cap, spar cap portion |
| 4 | tower | 41 | first outermost edge |
| 6 | nacelle | 42 | second outermost edge |
| 8 | hub | 43 | spar cap, spar cap portion |
| 10 | blade | 46 | shear web |
| 14 | blade tip | 51, 51' | blade shell root portion |
| 15 | tip end | 52 | root end |
| 16 | blade root | 53 | first end of root portion |
| 18 | leading edge | 54 | longitudinal axis of root portion |
| 20 | trailing edge | 61, 61' | blade shell transition portion |
| 24 | pressure side shell part | 62 | first end of transition portion |
| 26 | suction side shell part | 63 | second end of transition portion |
| 27 | exterior blade surface | 66 | first portion of spar cap |
| 30 | root region | 67 | second portion of spar cap |
| 32 | transition region | 68 | third portion of spar cap |
| 34 | airfoil region | 71, 71' | blade shell tip portion |
| 36 | pressure side of blade | 72 | first end of tip portion |
| 38 | suction side of blade | 74 | longitudinal axis of transition portion |
| 39 | fastening means | 80 | blade materials |
| 540, 640, 740, 840, 940: | spar cap | | |
| 545 | spar cap end | | |
| 601-608: | spar cap elements | | |
| 801-811: | spar cap elements | | |
| 901-908: | spar cap elements | | |
| 1014 | longitudinal axis of tip portion | | |
| 1001-1003: | spar cap elements | | |
| 1040: | spar cap in tip portion | | |
| 1050: | tip of spar cap in tip portion | | |
| 1138 | blade shell half | | |
| 1140: | spar cap | | |
| 1151-1153: | rectangular spar cap elements | | |
| 1201-1209: | spar cap elements | | |
| 1220: | region separating spar caps | | |
| 1240: | spar cap | | |
| 1320: | region separating spar caps | | |
| 1338 | blade shell half | | |
| 1340: | spar cap | | |
| 1351-1352: | rectangular spar cap elements | | |
| *α₁* | first angle with chord in third region | | |
| *α₂* | second angle with chord in third region | | |
| *α₃* | third angle with chord in third region | | |
| *C₁* | chord in first portion of spar cap | | |
| *Lᵣ* | length of root portion | | |
| *Lₜᵣ* | length of transition portion | | |
| *Lₜᵢₚ* | length of tip portion | | |
| *P₂* | second longitudinal position | | |
| *P₁* | first longitudinal position | | |
| *P₂* | second longitudinal position | | |
| *P₃* | third longitudinal position | | |
| *W₁* | first width of spar cap | | |
| *W₂* | second width of spar cap | | |

## Claims

1. A wind turbine blade shell portion having a leading edge (18) and a trailing edge (20) and comprising a wind turbine blade root portion (51), the root portion extending between a root end (52) and a first end (53) along a longitudinal axis (54) of the root portion, wherein the root end is configured for attaching the wind turbine blade shell portion to a wind turbine rotor hub, and wherein the root portion comprises a spar cap (540, 1240) having a first outermost edge (41) facing the leading edge of the blade shell portion and a second outermost edge (42) facing the trailing edge of the blade shell portion, wherein the spar cap has a first width *W₁* at a first longitudinal position *P₁* of the root portion and a second width *W₂* at a second longitudinal position *P₂* of the root portion, wherein the first longitudinal position is closer to the root end (52) than the second longitudinal position, and wherein the first width is larger than the second width.

2. A wind turbine blade shell portion in accordance with claim 1, wherein the root portion comprises fastening means (39) for attaching the blade shell portion to a wind turbine rotor hub, and wherein a distance *d_{f}* between the fastening means (39) and the spar cap (540, 1240) is in the range 0-3 meters, such as in the range 0-2 meters, such as in the range 0-1 meter.

3. A wind turbine blade shell portion in accordance with claim 1 or 2, wherein the width of the spar cap (540, 1240) decreases monotonically from an end (545) of the spar cap in a direction away from the root end (52).

4. A wind turbine blade shell portion having a leading edge (18) and a trailing edge (20) and comprising a transition portion (61), the transition portion extending between a first end (62) and a second end (63) along a longitudinal axis (74) of the transition portion, the transition portion comprising a spar cap (740, 840, 940) having a first outermost edge (41) facing the leading edge of the blade shell portion and a second outermost (42) edge facing the trailing edge of the blade shell portion, wherein at a first longitudinal position *P₁* in the transition portion, the spar cap extends in a first direction that forms a first angle *α₁* with a chord *C₁* that extends from the leading edge 18 to the trailing edge 20 of the blade shell portion at the first longitudinal position *P₁,* and at a second longitudinal position *P₂,* different from the first longitudinal position *P₁,* the spar cap extends in a second direction that forms a second angle *α₂* with the chord *C₁*, wherein a difference between the first angle and the second angle is in the range 0.5-20 degrees.

5. A wind turbine blade shell portion in accordance with claim 4, wherein the spar cap extends in a third direction at a third longitudinal position *P₃*, the third direction forming a third angle *α₃* with the chord *C₁*, wherein the second longitudinal position *P₂* is located between the first longitudinal position *P₁* and the third longitudinal position *P₃* and wherein the third angle is different from the second angle.

6. A wind turbine blade shell portion in accordance with claim 5, wherein a difference between the first angle *α₁* and the third angle *α₃* is in the range 0-10 degrees, such as in the range 0-5 degrees, such as in the range 0-2 degrees.

7. A wind turbine blade shell portion in accordance with claim 6, wherein a width of the spar cap varies by at most 10 %, such as by at most 5 %, between the first longitudinal position *P₁* and the third longitudinal position *P₃*.

8. A wind turbine blade shell portion having a leading edge (18) and a trailing edge (20) and comprising a wind turbine blade tip portion (71), the tip portion extending between a tip end (15) and a first end (72) along a longitudinal axis (1004) of the tip portion, the tip portion comprising a spar cap (1040) having a first outermost edge (41) facing the leading edge of the blade shell portion and a second outermost edge (42) facing the trailing edge of the blade shell portion, wherein the spar cap has a first width *W₁* at a first longitudinal position *P₁* of the tip portion and a second width *W₂* at a second longitudinal position *P₂ of* the tip portion, wherein the first longitudinal position is closer to the tip end of the tip portion than the second longitudinal position, and wherein the first width is smaller than the second width, a distance between the tip end (15) and a tip (1050) of the spar cap (1040) in the tip portion being at most 3 meters.

9. A wind turbine blade shell portion in accordance with claim 8, wherein the width of the spar cap decreases monotonically from the second longitudinal position *P₂* to the tip end (15).

10. A wind turbine blade shell portion in accordance with any one of claims 1-9, wherein the spar cap is formed, at least in part, from a first plurality of spar cap elements (601-611, 801-811, 901-908, 1001-1006, 1201-1209), wherein the first plurality of spar cap elements comprises at least a first spar cap element and a second spar cap element arranged adjacent to one another in a chordwise direction, wherein:
- the first spar cap element has an edge that forms at least a part of the first outermost edge (41) of the spar cap, and/or
- the second spar cap element has an edge that forms at least a part of the second outermost edge (42) of the spar cap,
at least one of the first spar cap element and the second spar cap element having a width that varies along the longitudinal axis (54, 74, 1004) of the blade shell portion.

11. A wind turbine blade shell portion in accordance with claim 10, wherein the varying width of the first spar cap element (601, 609, 805-807, 810, 1006) provides a curve in the outermost edge that the first spar cap element forms a part of.

12. A wind turbine blade shell portion in accordance with any one of claims 1-11, wherein at least a first part of the spar cap comprises two spar cap portions separated in a chordwise direction of the blade shell portion by a region (1220, 1320) without a spar cap.

13. A full-length wind turbine blade comprising a spar cap, the wind turbine blade extending between a blade root end (52) to a blade tip end (15), the wind turbine blade comprising at least two blade shell portions out of: a blade shell portion in accordance with any one of claims 1-3, or any one of claims 10-12 as dependent on claim 1; a blade shell portion in accordance with any one of claims 4-7, or any one of claims 10-12 as dependent on claim 4; a blade shell portion in accordance with any one of claims 8-9, or any one of claims 10-12 as dependent on claim 8; the spar caps of the at least two blade shell portions being configured to meet each other or being formed integrally.

14. A full-length wind turbine blade in accordance with claim 13, wherein the spar cap of the wind turbine blade comprises a first spar cap section in which the width of the spar cap of the blade has a local maximum, wherein a point at which the first spar cap section has the local maximum width is within a distance of 20 % of a point at which the full-length blade has a maximum chord length.

15. A wind turbine blade shell portion in accordance with any one of claims 10-11 or in accordance with claim 12 as dependent on claim 10, or a full-length wind turbine blade in accordance with one of claims 13-14 as dependent on claim 10, wherein at least a second plurality of the first plurality of spar cap elements are fibre-reinforced composite pultrusions.
